# EUROPÄISCHE PATENTANMELDUNG

(11) **EP 4 623 860 A1**
(43) Veröffentlichungstag der Anmeldung: **01.10.2025**
(21) Anmeldenummer: 24222042.4
(22) Anmeldetag: 20.12.2024
(51) Int. Cl.: A61C 8/00

(54) **MEHRTEILIGER ZAHNERSATZ MIT SCHRAUBVERBINDUNG**

(30) Priorität: 22.12.2023 DE 102023136611
(71) Anmelder: BEGO Implant Systems GmbH & Co. KG, 28359 Bremen (DE)
(72) Erfinder: MEYER, Stephan, 28359 Bremen (DE)
(74) Vertreter: Eisenführ Speiser

(57) **Zusammenfassung**

Die Erfindung umfasst eine Zahnersatzvorrichtung, umfassend eine erste, im Mundraum eines Patienten zu befestigende Zahnersatzkomponente mit einem Innengewinde, eine zweite, im Mundraum des Patienten an der ersten Komponente zu befestigende Zahnersatzkomponente mit einem Schraubenkanal und einer Schraubenkopfwiderlagerfläche, und eine Schraube zur Befestigung der zweiten Zahnersatzkomponente an der ersten Zahnersatzkomponente, mit einem Schraubenkopf mit einem Werkzeugangriffsabschnitt, einem Außengewindeabschnitt mit einem zu dem Innengewinde der ersten Zahnersatzkomponente korrespondierenden Außengewinde, und einem zwischen dem Schraubenkopf und dem Gewindeabschnitt liegender Schaftabschnitt, wobei im Übergang des Schraubenkopfes zu dem Schaftabschnitt eine Kopfauflagefläche ausgebildet ist zur Abstützung des Schraubenkopfes auf der Schraubenkopfwiderlagerfläche der zweiten Zahnersatzkomponente, und der Gewindeabschnitt und der Schaftabschnitt zur Durchführung durch den Schraubenkanal der zweiten Zahnersatzkomponente ausgebildet sind, dadurch gekennzeichnet, dass der Außengewindeabschnitt der Schraube eine sich über die gesamte Länge des Außengewindes erstreckende Längsnut aufweist, und die Schraubenkopfwiderlagerfläche der zweiten Komponente einen zu der Längsnut korrespondierenden Vorsprung aufweist, dessen Querschnittsabmessungen so ausgebildet sind, dass der Vorsprung beim Durchführen des Außengewindeabschnitts durch den Schraubenkanal in die Längsnut eingreift.

## Beschreibung

Die Erfindung betrifft eine Zahnersatzvorrichtung, umfassend eine erste, im Mundraum eines Patienten zu befestigende Zahnersatz-komponente mit einem Innengewinde, eine zweite, im Mundraum des Patienten an der ersten Komponente zu befestigende Zahnersatzkomponente mit einem Schraubenkanal und einer Schraubenkopfwiderlagerfläche, und eine Schraube zur Befestigung der zweiten Zahnersatzkomponente an der ersten Zahnersatzkomponente, mit einem Schraubenkopf mit einem Werkzeugangriffsabschnitt, einem Außengewindeabschnitt mit einem zu dem Innengewinde der ersten Zahnersatzkomponente korrespondierenden Außengewinde, und einem zwischen dem Schraubenkopf und dem Gewindeabschnitt liegender Schaftabschnitt, wobei im Übergang des Schraubenkopfes zu dem Schaftabschnitt eine Kopfauflagefläche ausgebildet ist zur Abstützung des Schraubenkopfes auf der Schraubenkopfwiderlagerfläche der zweiten Zahnersatzkomponente, und der Gewindeabschnitt und der Schaftabschnitt zur Durchführung durch den Schraubenkanal der zweiten Zahnersatzkomponente ausgebildet sind.

Ein weiterer Aspekt der Erfindung ist eine Schraube zur Befestigung eines zweiten Bauteils an einem ersten Bauteil, mit einem Schraubenkopf mit einem Werkzeugangriffsabschnitt, einem Außengewindeabschnitt mit einem Außengewinde, und einem zwischen dem Schraubenkopf und dem Gewindeabschnitt liegender Schaftabschnitt, wobei im Übergang des Schraubenkopfes zu dem Schaftabschnitt eine Kopfauflagefläche ausgebildet ist, sowie die Verwendung einer solchen Schraube zur Verbindung einer ersten mit einer zweiten Zahnersatzkomponente.

Eine Zahnersatzvorrichtung dient dazu, einen oder mehrere natürliche Zähne in ästhetischer und funktionaler Hinsicht vollständig oder teilweise im sichtbaren Bereich zu ergänzen. Der zu ersetzende natürliche Zahn wird zu diesem Zweck extrahiert oder ist durch ein Trauma bereits nicht mehr vorhanden oder kann noch als Tragstruktur verwendet werden und wird in diesem Fall als zu ergänzender Zahn präpariert. Die Zahnersatzvorrichtung wird dann in der Regel im Kieferknochen, also im Ober- oder Unterkieferknochen des Patienten befestigt, kann aber auch alternativ oder zusätzlich an einem Zahn in Form einer Krone oder aber an den benachbarten Zähnen oder einem benachbart angeordneten Zahnersatz in Form einer Brücke befestigt werden.

Eine verbreitet eingesetzte Ausgestaltung einer Zahnersatzvorrichtung umfasst einerseits ein Implantat, auch als Zahnimplantat bezeichnet, das in dem Kieferknochen in einer darin eingebrachten Vertiefung verankert wird. Diese Verankerung wird typischerweise durch Einschrauben des Implantats in eine entsprechende vorgebohrte Bohrung erreicht, kann aber auch beispielsweise durch Zementierung darin erfolgen. An dem Implantat wird dann, häufig nach einer mehrmonatigen Einheildauer, eine Zahnaufbaueinheit, auch als Abutment bezeichnet, befestigt, die eine Schnittstelle zwischen dem Implantat und einer Zahnrestauration darstellt. Die Zahnrestauration ist eine Rekonstruktion des im Mundraum sichtbaren Zahnteils darstellt und dementsprechend in Farbe und Geometrie dem ursprünglichen Zahn nachempfunden und den benachbarten und gegenüberliegenden Zähnen angepasst. Diese Unterteilung einer Zahnersatzvorrichtung in ein Implantat, eine Zahnaufbaueinheit und eine Zahnrestauration hat sich bewährt, da hierdurch nach Erfassung der genauen Lage des Implantats im Kieferknochen eine exakte Positionierung und Ausrichtung mit einer dafür entsprechend hergestellten Zahnaufbaueinheit möglich ist.

Grundsätzlich kann die Zahnaufbaueinheit als einteiliges Bauteil bereitgestellt werden. Dies erfordert jedoch eine Herstellung einer einteiligen Zahnaufbaueinheit, die einerseits an die individuelle Geometrie des Zahns angepasst sein muss, andererseits eine geometrisch exakte Schnittstelle für die Verankerung am Implantat aufweist. Damit die Zahnaufbaueinheit für das jeweils zu versorgende Implantat passt, muss sie für die Situation angepasste Geometrien wie z.B. die Gingivahöhe, die Winkelausrichtung, die Höhe und den Durchmesser aufweisen. Dies erfordert bei Standardabutments eine große Anzahl an unterschiedlichen Varianten, die für die Versorgung der Patienten vorgehalten werden müssen, was kostenintensiv ist und einen hohen Lageraufwand mit sich bringt.

Alternativ kann die einteilige Zahnaufbaueinheit auch mittels CAD/CAM-Verfahren für den Patienten individuell erzeugt werden. Diese individuelle Herstellung der Zahnaufbaueinheit ist fertigungstechnisch ausgesprochen aufwendig und aufgrund der vielfältigen Anforderungen nicht in kostengünstiger Weise zu erreichen.

In der zahnmedizinischen Praxis ist daher heutzutage weit verbreitet, die Zahnaufbaueinheit aus mehreren Teilen bereitzustellen. Durch eine solche mehrteilige Gestaltung der Zahnaufbaueinheit wird dem Kliniker eine große Vielseitigkeit bei der Auswahl der Komponenten geboten, da er aus mehreren standardisierten Bauteilen auswählen kann, um beispielsweise aufbauend auf dem Implantat eine bestimmte Winkellage oder einen bestimmten Abstand herzustellen und dann auf der so geschaffenen Plattform ein den Zahn individuell rekonstruierendes Bauteil, beispielsweise eine Krone oder Brücke, zu befestigen. Diese mehrteilige Ausführung erlaubt es daher, durch die Bereitstellung standardisierter, vorgefertigter Bauelemente einerseits und einer Konzentration der individuellen Herstellung auf den eigentlich sichtbaren Zahnanteil im Mundraum diese große Vielseitigkeit zugleich mit einer reduzierten Gesamtzahl der bereitzustellenden vorgefertigten Komponenten zu verwirklichen, was das System vereinfacht und die Kosten reduziert. Die Möglichkeit der Wahl solcher mehrteiligen Zahnaufbaueinheiten, sogenannter Multi-Unit-Abutments, in der oralen Implantologie schafft somit prothetische Flexibilität bei implantatgetragenen Restaurationen. Multi-Unit-Abutments bieten ein Maß an vorhersagbarer Ästhetik bei gleichbleibender hochwertiger Passform und Funktion, sodass die Wirksamkeit implantatgetragener Zahnersatzkonstruktionen erheblich verbessert wird.

Als grundsätzlicher Nachteil der mehrteiligen Ausgestaltung bei solchen Multi-Unit-Abutments ist jedoch zu sehen, dass entsprechend mehrere Bauteile miteinander belastbar und dauerhaft miteinander verbunden werden müssen. So muss in der Regel nach Verankerung des Implantats im Kieferknochen zunächst ein mit dem Implantat zu verbindendes erstes Zahnaufbauteil an dem Implantat befestigt werden. An diesem ersten Zahnaufbauteil wird dann nachfolgend eine Krone oder ein zweites Zahnaufbauteil befestigt, auf dem dann die Zahnrestauration in Form einer Krone, Brücke oder dergleichen angebracht wird. Bei speziellen anatomischen oder pathologischen Befunden kann es jedoch auch erforderlich sein, eine Verbindung von drei oder sogar mehr Zahnaufbauteilen zu der Zahnaufbaueinheit und deren Verbindung zum Implantat einerseits und der Krone, Brücke oder dergleichen andererseits herzustellen.

Grundsätzlich stehen zur Befestigung der einzelnen Bauteile aneinander zwei Möglichkeiten zur Verfügung, die in der klinischen Praxis eingesetzt werden. Einerseits können die Bauteile miteinander verklebt werden, was auch als Zementierung bezeichnet wird, andererseits können die Bauteile miteinander verschraubt werden. Die Verklebung weist den Vorteil auf, dass sie eine bei der Verschraubung stets auftretende Strukturschwächung durch Schraubenkanäle, Gewinde und den für einen Schraubenkopf vorzusehenden Hohlraum vermeidet. Jedoch erfordert die Zementierung eine sichere Handhabung des Zements, um eine dauerhaft feste Verbindung zu erzeugen, erlaubt keine probeweise Montage der Zahnersatzvorrichtung und auch keine einfache spätere Entfernung oder Korrektur. Die geschraubte Verbindung der Bauteile miteinander vermeidet diese Nachteile, führt jedoch zu dem Nachteil, dass insbesondere bei der mehrteiligen Ausgestaltung ungünstige Platzverhältnisse auftreten.

Eine Schraubverbindung stellt grundsätzlich eine Verbindung von zwei Bauteilen durch eine Anpresskraft dar, die mittels einer Schraube erzeugt wird. Die Schraube dient dabei als Zugspannungselement und wird unter eine Zugbeanspruchung gesetzt, die zwischen dem Schraubenkopf und dem Gewinde der Schraube herrscht. Das Gewinde der Schraube benötigt daher eine entsprechend belastbare Verankerung in einem Gegengewinde, das in einem der beiden Bauteile ausgeführt sein kann oder als separate Schraubenmutter ausgeführt sein kann. Der Schraubenkopf benötigt eine entsprechende Schraubenkopfwiderlagerfläche in dem entsprechend anderen Bauteil der beiden zu verbindenden Bauteile.

Die Verbindung von drei oder mehr Bauteilen mittels einer solchen Schraubverbindung erfordert es daher regelmäßig, den Schraubenkopf einer Schraubverbindung zwischen einem ersten und einem zweiten Bauteil in dem zweiten Bauteil zu verankern und das Schraubengewinde einer zweiten Schraubverbindung zwischen einem dritten und dem zweiten Bauteil in dem zweiten Bauteil zu verankern. Im zweiten Bauteil muss daher einerseits eine Schraubenkopfwiderlagerfläche, andererseits ein Schraubengewinde bereitgestellt werden, was zu beengten Platzverhältnissen führt.

Nach Erkenntnis der Erfinder regelmäßig nicht praktikabel ist es, die Schraube zur Befestigung des dritten an dem zweiten Bauteil in einem Innengewinde zu verankern, dessen Innendurchmesser so groß ist, dass zugleich der Schraubenkopf der Schraube zur Befestigung des zweiten Bauteils am ersten Bauteil darin platziert werden kann und in der Bohrung dieses Innengewindes ein Schraubenkopfwiderlager findet. Durch eine solche Gestaltung wird das Außengewinde der Schraube zur Befestigung des dritten am zweiten Bauteil einen so großen Durchmesser aufweisen müssen, dass der Schraubenkopf dieser Schraube einen derart großen Platzbedarf aufweist, dass dies sowohl mit funktionalen Anforderungen an die Festigkeit des dritten Bauteils als auch mit ästhetischen Anforderungen dieses dritten Bauteils, das häufig ein im Mundraum angeordnetes Bauteil darstellt, das lediglich von der Krone, Brücke oder dergleichen abgedeckt wird, nicht zu vereinbaren ist.

Im Stand der Technik sind daher Ansätze entwickelt worden, eine erste Schraube zum Befestigen des unteren Teils des Multi-Unit-Abutments an dem Implantat in das untere Teil des Abutments einzuführen und anschließend den oberen Teil des Multi-Unit-Abutments mittels einer zweiten Schraube mit einem Innengewinde des unteren Teils zu verschrauben, ohne dass dabei die Öffnung mit dem Innengewinde des Abutments als Einführöffnung der ersten Schraube dient. So ist aus WO 2012/039819 vorbekannt, bei abgewinkelten Multi-Unit-Abutments in der Achse, in der das Abutment mit dem Implantat liegt, eine erste Öffnung vorzusehen, durch welche die erste Schraube zur Befestigung des unteren Teils des Abutments am Implantat eingeführt wird. Der untere Teil des Abutment weist dann eine zweite Öffnung mit einem Innengewinde für die zweite Schraube auf, mit welcher der obere Teil des Multi-Unit-Abutemnts mit dem unteren Teil verbunden wird, dessen Achse in der Achse der Abwinklung liegt. Hierdurch kann zwar grundsätzlich auch das Innengewinde im unteren Teil des Multi-Unit-Abutment mit kleinem Durchmesser ausgeführt werden, so dass die Abmessung des Schraubenkopfs der zweiten Schraube im oberen Teil des Multi-Unit-Abutments kleiner ausfallen kann und das Gesamterscheinungsbild der Zahnrestauration nicht negativ beeinflusst. Nachteilig ist jedoch, dass diese Lösung nur bei abgewinkelten Abutments funktioniert und dass bei dieser Lösung der untere Teil des Multi-Unit-Abutment durch zwei Öffnungen geschwächt wird, die zudem häufig beide aus ästhetischen Gründen noch geometrisch und farblich angepasst verschlossen werden müssen.

Aus US 2018/0280123 A1 ist eine andere Variante dieses Lösungsansatzes für abgewinkelte Multi-Unit-Abutments vorbekannt. Bei dieser Variante liegen die Austrittsöffnungen der Achse des Schraubenkanals für die erste Schraube zur Befestigung am Implantat und die Achse des Innengewindes zur Befestigung des oberen Teils des Multi-Unit-Abutments am unteren Teil des Multi-Unit-Abutments so dicht beieinander, dass sich die Austrittsöffnungen überlappen. Auch für diese Lösung gilt, dass sie nur bei abgewinkelten Abutments funktioniert.

Aus EP 2 276 415 B1 und EP 1 139 906 sind Lösungen bekannt, bei denen die erste Schraube, die zum Befestigen des unteren Teils des Multi-Unit-Abutments am Implantat dient, durch einen Schraubenaustrittskanal eingeführt wird und mittels Klemmring bzw. Stützring darin axial positioniert und gehalten wird. Dies ermöglicht zwar eine im KopfDurchmesser reduzierte Gestaltung der zweiten Schraube, mit der das obere Teil des Multi-Unit-Abutments am unteren Teil befestigt wird. Nachteilig bei diesen Ansätzen ist jedoch, dass ein großer Aufwand betrieben werden muss, um die Schraube nach dem Einführen in den unteren Teil des Multi-Unit-Abutments zu positionieren und dies in der Arbeitsweise unter beengten Bedingungen häufig nicht zuverlässig und exakt genug verwirklicht werden kann.

Aus EP 2 266 498 B1 ist ein weiterer Ansatz zur Lösung der Problematik bekannt. Hierbei wird zunächst die erste Schraube, zur Befestigung eines unteren Teils des Multi-Unit-Abutments am Implantat, durch eine Öffnung des unteren Teils in dieses Teil eingeführt und das untere Teil des Multi-Unit-Abutment mit dem Implantat verbunden. Diese Öffnung weist bereits ein Innengewinde auf, das dazu dient, ein Außengewinde eines mittleren Teils des Abutments, der als Adapter dient, aufzunehmen. Der Adapter hat wiederum ein kleineres Innengewinde, in welches dann eine zweite Schraube eingedreht werden kann, die zum Befestigen eines oberen Teils des Multi-Unit-Abutments an den Adapter dient. Zwar kann auch bei dieser Lösung sowohl die erste als auch die zweite Schraube mit einem kleinen Durchmesser ausgeführt werden. Nachteilig an dem Ansatz ist jedoch, dass der untere Teil des Multi-Unit-Abutment durch eine große Öffnung mit Gewinde geschwächt wird und dass ein zusätzliches weiteres Element in Form des Adapters notwendig ist, das zudem wiederum unter den beengten Verhältnissen im Mundraum des Patienten häufig nicht exakt eingeführt werden kann und dessen Einsatz eine zusätzliche Fehlerquelle darstellt.

Die Aufgabe der Erfindung liegt darin, in einer Zahnersatzvorrichtung eine Verbindung zwischen mehreren Bauteilen bereitzustellen, welche zumindest einige der vorstehend genannten Nachteile vermeidet.

Diese Aufgabe wird erfindungsgemäß gelöst mit einer Zahnersatzvorrichtung der zuvor beschriebenen Bauart, bei welcher der Außengewindeabschnitt der Schraube eine sich über die gesamte Länge des Außengewindes erstreckende Längsnut aufweist, und die Schraubenkopfwiderlagerfläche der zweiten Komponente einen zu der Längsnut korrespondierenden Vorsprung aufweist, dessen Querschnittsabmessungen so ausgebildet sind, dass der Vorsprung beim Durchführen des Außengewindeabschnitts durch den Schraubenkanal in die Längsnut eingreift.

Die erfindungsgemäße Zahnersatzvorrichtung zeichnet sich durch eine spezifische Konstruktion der Schraubenkopfwiderlagerfläche in der zweiten Komponente und eine hierzu spezifische Konstruktion der Schraube aus. Durch diese Konstruktion wird vermieden, dass der Durchmesser des Schraubenkopfes größer als der Außendurchmesser des Außengewindes sein muss und dennoch eine belastbare Auflagefläche der Kopfauflagefläche des Schraubenkopfes auf einer Schraubenkopfwiderlagerfläche der zweiten Zahnersatzkomponente erreicht. Dies wird erfindungsgemäß bewirkt, indem in dem Außengewindeabschnitt der Schraube zumindest eine Längsnut vorhanden ist und die Schraubenkopfwiderlagerfläche entsprechend zumindest einen Vorsprung aufweist, der zu dieser Längsnut korrespondiert. Unter einem Korrespondieren des Vorsprungs zu der Längsnut ist hierbei zu verstehen, dass der in einer Querschnittsbetrachtung der Vorsprung zumindest teilweise in der Längsnut aufgenommen werden kann und die Schraube folglich axial durch den Schraubenkanal geführt werden kann, indem der Vorsprung in der Längsnut eingreift. Die Schraubenkopfwiderlagerfläche wird dabei durch eine Auflagefläche an dem Vorsprung teilweise oder vollständig gebildet. Bevorzugt weist die Schraube zumindest zwei Längsnuten auf und die Schraubenkopfwiderlagerfläche dementsprechend zumindest zwei zu diesen Längsnuten korrespondierende Vorsprünge, wobei zu verstehen ist, dass die Längsnuten und dementsprechend die Vorsprünge vorzugsweise gleichmäßig über den Umfang der Schraube bzw. der Schraubenkopfwiderlagerfläche verteilt sind. Bei einer einzigen Längsnut und einem einzigen Vorsprung wird eine exzentrische Belastung beim Anziehen der Schraube durch deren Auflage im Bereich des Schraubenkopfes erzeugt, was eine ungünstige Belastung der Schraube darstellt. Dies kann bei zwei Längsnuten und Vorsprüngen bereits vermieden werden, indem diese einander gegenüberliegend in Bezug auf die Mittellängsachse der Schraube angeordnet werden und bei mehr als zwei Längsnuten und Vorsprüngen durch eine Verteilung über den Umfang.

Durch die erfindungsgemäße Ausgestaltung wird es ermöglicht, dass die im Querschnitt innere Umschreibende des Schraubenkanals im Bereich der Vorsprünge, also beispielsweise ein radial innenliegend zu den Vorsprüngen eingeschriebener Kreis, eine kleinere radiale Abmessung hat als die äußere Umhüllende des Außengewindes, also beispielsweise ein Kreis mit äußerem Gewindedurchmesser. Hierdurch wird einerseits erreicht, dass die Schraube im Bereich des Außengewindes einen für eine ausreichende Festigkeit notwendigen Außendurchmesser und Kerndurchmesser aufweist, zugleich aber die Umhüllende des Schraubenkopfes nicht notwendigerweise über diese Umhüllende in radialer Richtung hinausstehen muss (aber kann), sondern nur geringfügig größer, gleich groß oder sogar kleiner in radialer Richtung ausgebildet sein kann als der Außendurchmesser des Außengewindes. Dies wird erreicht, indem die Schraubenkopfwiderlagerfläche durch die axiale Stirnfläche(n) der radial einwärts ragenden Vorsprünge im Schraubenkanal (oder auch die Stirnfläche eines einzelnen Vorsprungs) teilweise oder vollständig bereitgestellt wird, deren innenliegender Durchlassquerschnitt jedoch nicht den zulässigen Außendurchmesser des Außengewindes begrenzt, weil die Vorsprünge in die entsprechenden Nuten in der Schraube eingreifen, wenn diese in axialer Richtung durch den Schraubenkanal eingeführt wird.

Typischerweise ist die Schraube beim axialen Hindurchführen durch den Schraubenkanal durch dieses Ineinandergreifen von Vorsprung und Nut rotationsgehemmt. Um die Schraube also drehen und somit anziehen zu können, muss die Schraube daher zunächst in axialer Bewegung durch den Schraubenkanal geführt werden, wobei je nach Ausgestaltung von Vorsprung und Nut diese Bewegung ohne jegliche Rotation oder mit einer geringen Rotation erfolgen kann, je nachdem, ob sich die Vorsprünge und Nuten genau axial erstrecken oder mit einer leichten Gewindesteigung verlaufen. Im Moment des Aufsitzens der Kopfauflagefläche auf der Schraubenkopfwiderlagerfläche liegen der Vorsprung oder die Vorsprünge vorzugsweise auf axialer Höhe des Schraubenschaftes, der so bemessen ist, dass die Schraube dann um ihre Mittellängsachse rotiert werden kann und folglich in das Innengewinde der ersten Komponente eingeschraubt werden kann. Dies bedeutet, dass die Schraube im Bereich des Schraubenschaftes einen gegenüber dem Außengewindedurchmesser reduzierten Durchmesser aufweist und die axiale Länge des Schraubenschaftes größer als die axiale Länge des Vorsprungs ist oder dieser entspricht. Vorteilhaft ist insbesondere, wenn der Schraubenschaft einen Durchmesser aufweist, welcher der radialen Weite eines eingeschriebenen Kreises zwischen den Vorsprüngen im Schraubenkanal entspricht oder kleiner als diese radiale Weite ist.

In Ausgestaltungen, bei denen eine rotierbare Gegenmutter mit Innengewinde zum Anziehen der Schraubverbindung genutzt wird, kann auch darauf verzichtet werden, dass die Schraube durch axiales Hindurchführen der Nut entlang des Vorsprungs bis zu einer Position, in der die Rotationshemmung durch das Ineinandergreifen von Nut und Vorsprung aufgehoben ist, gedreht werden kann und die Rotationshemmung genutzt werden, um die Gegenmutter ohne ungewolltes Mitdrehen der Schraube anzuziehen. Der Schaftabschnitt der erfindungsgemäßen Schraube muss daher in diesem Anwendungsfall nicht so bemessen sein, dass er ein freies Drehen der Schraube um ihre Längsachse erlaubt, wenn die Kopfauflagefläche auf der Schraubenkopfwiderlagerfläche aufliegt. Grundsätzlich ist zu verstehen, dass der Schraubenschaft auch durch einen sehr kurzen Übergangsabschnitt zwischen Außengewindeabschnitt und Schraubenkopf ausgebildet sein kann, beispielsweise einen Abschnitt, in dem das Außengewinde ausläuft.

Mit der erfindungsgemäßen Zahnersatzvorrichtung wird in vorteilhafter Weise ein kleineres Verhältnis der radialen Weite des Schraubenkopfes, also beispielsweise des Durchmessers, zu dem Außendurchmesser des Außengewindes der Schraube erreicht als dies bei herkömmlich verwendeten Schrauben möglich ist. Das Verhältnis kann bis auf 1 oder sogar unter 1 reduziert werden. Dabei ist zu verstehen, dass sich das Verhältnis der radialen Weite des Schraubenkopfes zu dem Außendurchmesser des Gewindes aus einer gewünschten Größe der Auflagefläche zwischen Kopfauflagefläche und Schraubenkopfwiderlagerfläche und dem gewünschten Außendurchmesser des Außengewindes sowie der Tiefe der Längsnut bzw. Längsnuten, welche die radiale Erstreckung der Vorsprünge begrenzen, ergibt. Ein ausgewogenes Verhältnis dieser geometrischen Größen ist jeweils einzustellen, um eine ausreichend große Abstützungskraft zwischen Schraubenkopf und Schraubenkopfwiderlagerfläche, eine ausreichende Tragfähigkeit des Außengewindes und eine ausreichend große Belastbarkeit der Schraube unter Berücksichtigung der Schwächung durch die Längsnut bzw. Längsnuten zu erzielen.

Eine erste bevorzugte Ausführungsform zeichnet sich dadurch aus, dass die Schraubenkopfwiderlagerfläche durch den einen Vorsprung und zumindest einen weiteren Vorsprung gebildet wird und dass der Außengewindeabschnitt eine Anzahl von zu den Vorsprüngen korrespondierenden Längsnuten aufweist. Die entsprechend mehreren Vorsprünge bzw. Längsnuten sind dabei vorteilhafterweise gleichmäßig über den Umfang des Schraubenkanals bzw. des Außengewindes verteilt, also die Winkel zwischen jeweils zwei benachbarten Vorsprüngen und Längsnuten sind übereinstimmend. Durch eine solche Mehrzahl von Vorsprüngen und Nuten wird eine exzentrische Belastung der Schraube beim Anziehen vermieden und die Schraube durch eine Längskraft und ein Torsionsmoment beim Anziehen belastet und im angezogenen Zustand durch eine im Wesentlichen axial ausgerichtete Längskraft alleine belastet.

Es ist weiter bevorzugt, wenn sich die Schraube axial entlang einer Mittellängsachse erstreckt und der Schraubenkopf in radialer Richtung in Bezug auf die Mittellängsachse eine maximale Schraubenkopfweite, insbesondere einen maximalen Schraubenkopfdurchmesser, D_{SK}, der Schaftabschnitt in radialer Richtung in Bezug auf die Mittellängsachse eine maximale Schaftweite, insbesondere einen maximalen Schaftdurchmesser, D_{SA}, der Außengewindeabschnitt einen Außengewindedurchmesser D_{GewAu}, der dem Außendurchmesser der zylindrischen Umhüllenden des Gewindeabschnitts entspricht, der Außengewindeabschnitt einen Gewindekerndurchmesser D_{GewKern}, die Nut einen Nutgrund und eine Nuttiefe, gemessen in radialer Richtung in Bezug auf die Mittellängsachse von dem Außengewindedurchmesser D_{GewAu} zu dem Nutgrund, die Querschnittsfläche des Schraubenkanals eine maximale und eine minimale Weite, und der Vorsprung einen radiale Vorsprungshöhe, gemessen als Differenz aus maximaler zu minimaler Weite, aufweist. Dabei ist zu verstehen, dass die Mittellängsachse der Schraube der Rotationsachse entspricht, um welche die Schraube gedreht wird, wenn das Außengewinde der Schraube in das Innengewinde der ersten Komponente eingeschraubt wird und die Mittellängsachse demzufolge auch der durch dieses Innengewinde definierten Rotationsachse entspricht. Grundsätzlich ist es bevorzugt, dass Schraubenkopf, Schaftabschnitt und Außengewindeabschnitt eine kreisförmige Umhüllende haben, wobei zu verstehen ist, dass die Umhüllende im Bereich des Außengewindeabschnitts als Kreislinie entlang des Umfangs des Außengewindes verläuft. Andere, von dieser Form mit kreisförmigem Querschnitt abweichende Geometrien sind in bestimmten Anwendungen vorteilhaft. Der Schraubenkanal weist eine Querschnittsfläche auf, die im Außenumfang durch die Vorsprünge eingeschnürt wird. Hierdurch ergibt sich eine minimale Weite, die im Bereich dieser Vorsprünge gemessen wird und die durch einen oder zwei einander gegenüberliegende Vorsprünge reduziert ist und daher als minimale Weite im erfindungsgemäßen Sinn verstanden wird. Die maximale Weite hingegen liegt im Schraubenkanal zwischen den seitlich der Vorsprünge liegenden Innenwänden bzw. ergibt sich als der doppelte Abstand der Mittellängsachse zu der Innenwand des Kanals zwischen zwei Vorsprüngen. Als Gewindekerndurchmesser wird hierbei der Durchmesser des Gewindes im Gewindenutgrund, also der doppelte Abstand des Gewindenutgrundes von der Mittellängsachse der Schraube verstanden.

Dabei ist es bei einer Zahnersatzvorrichtung dieser Bauart besonders bevorzugt, wenn der Außengewindedurchmesser D_{GewAu} und die maximale Schraubenkopfweite D_{SK} weniger als 5 - 10 %, bezogen auf den Wert des größeren Durchmessers, voneinander abweichen, insbesondere Außengewindedurchmesser D_{GewAu} und Schraubenkopfweite D_{SK} gleich sind, und/oder die maximale Schaftweite kleiner als die maximale Schraubenkopfweite D_{SK} ist, und/oder der Gewindekerndurchmesser D_{GewKern} und die maximale Schaftweite D_{SA} weniger als 5 - 10 %, bezogen auf den Wert des größeren Durchmessers, voneinander abweichen, und/oder die Vorsprungshöhe kleiner als die Nuttiefe ist, und/oder die Differenz aus halbem Außengewindedurchmesser D_{GewAu} und Nuttiefe größer ist als die Hälfte der minimalen Weite des Schraubenkanals, und/oder die Nuttiefe größer oder gleich der Hälfte der Differenz aus dem Außengewindedurchmesser D_{GewAu} und dem Gewindekerndurchmesser D_{GewKern} ist.

Durch eine nur geringe Abweichung von Außengewindedurchmesser und maximaler Schraubenkopfweite wird ein günstiges Verhältnis der Belastbarkeit des Außengewindes und der Schraube im Bereich des Außengewindes einerseits und eine nur kleine notwendige Weite des Schraubenkanals im zweiten Bauteil zur Durchführung des Schraubenkopfes erzielt. Eine kleinere maximale Schaftweite als die maximale Schraubenkopfweite erzeugt eine belastbare Kopfauflagefläche am Schraubenkopf zur Abstützung der Schraube beim Anziehen. Bevorzugt ist es, wenn Gewindekerndurchmesser und maximale Schaftweite nur gering voneinander abweichen oder gleich sind. Alternativ oder zusätzlich ist es bevorzugt, dass der zweifache Abstand des Nutgrundes von der Mittellängsachse weniger als 5 - 10 %, bezogen auf den Wert des größeren Durchmessers, von der maximalen Schaftweite abweicht. Dieser geringe Unterschied zwischen Gewindekerndurchmesser bzw. dem Querschnittsdurchmesser im Bereich der Nut des Gewindes im Verhältnis zur maximalen Schaftweite erlaubt eine hohe Belastbarkeit der Schraube im Bereich des Schaftes bei zugleich sichergestellter freier Rotationsfähigkeit der Schraube, wenn die Vorsprünge im Bereich des Schaftes liegen. Eine geringere Vorsprungshöhe als die Nuttiefe erlaubt eine zuverlässige Freigängigkeit des Vorsprungs in der Nut, wenn die Schraube axial in den Schraubenkanal eingeführt wird. Bevorzugt ist der Abstand zwischen der Innenfläche des Vorsprungs zu der Mittellängsachse des Schraubenkanals größer als der Abstand des Nutgrundes von der Mittellängsachse der Schraube, sodass sich ein sicherer radialer Abstand einstellt, um die Schraube axial durch den Schraubenkanal zu führen.

Ein ausreichender Freigang für das axiale Einführen der Schraube bei gleichzeitiger Optimierung der Belastbarkeit von Schraube und der Gewindeverbindung zwischen Schraube und erstem Bauteil und bei zugleich ideal reduzierten Abmessungen zur Minimierung der Schraubenkanalabmessungen wird ebenfalls erreicht, wenn die Hälfte der minimalen Weite des Schraubenkanals größer ist als die Differenz aus halbem Außengewindedurchmesser und Nuttiefe und/oder wenn die Nuttiefe größer oder gleich der Hälfte der Differenz aus dem Außengewindedurchmesser und dem Gewindekerndurchmesser ist.

Noch weiter ist es bevorzugt, wenn die Schraube in einer Querschnittsfläche bezogen auf die Mittellängsachse einen Nutquerschnittsanteil von 0,3 bis 0,7 aufweist, wobei der Nutquerschnittsanteil definiert ist als Verhältnis einer Nutquerschnittsgesamtfläche zu einer Ringquerschnittsfläche, worin die Nutquerschnittsgesamtfläche definiert ist als die Summe der Nutquerschnittsflächen aller Nuten der Schraube, wobei eine Nutquerschnittsfläche definiert ist als die Größe einer Fläche, die radial durch den Gewindekerndurchmesser D_{GewKern} und den Außengewindedurchmesser D_{GewAu} begrenzt wird und in Umfangsrichtung durch die Nutflankenflächen begrenzt wird, und die Ringquerschnittsfläche definiert ist als die Größe einer Ringfläche, die zwischen einem in die Nutgrundflächen eingeschriebenen Kreis und einem Kreis mit Außengewindedurchmesser D_{GewAu} liegt, wobei der Nutquerschnittsanteil vorzugsweise mindestens 0,3 und vorzugsweise mindestens 0,4 oder mindestens 0,5 groß ist und wobei der Nutquerschnittsanteil vorzugsweise höchstens 0,7 und vorzugsweise höchstens 0,6 oder höchstens 0,5 groß ist und weiter vorzugsweise der Nutquerschnittsanteil über zumindest 75 % der Gesamtlänge des Gewindes, insbesondere über die gesamte Länge des Außengewindes zwischen 0,3, 0,4, oder 0,5 als Untergrenze und 0,7, 0,6 oder 0,5 als Obergrenze liegt.

Gemäß dieser Ausführungsform wird ein für die Beanspruchbarkeit der Schraubenverbindung günstiges Verhältnis der Auflagefläche zwischen Schraubenkopf und Vorsprüngen einerseits und der Tragfähigkeit der Außengewindegänge andererseits erzielt. Grundsätzlich ist dabei zu verstehen, dass durch die Nuten die Tragfähigkeit des Außengewindes reduziert wird und folglich eine hohe Nutquerschnittsgesamtfläche zu einer hohen Reduktion der Tragfähigkeit des Außengewindes führt. Zugleich wird die Größe der Vorsprünge, welche die Auflagefläche für den Schraubenkopf darstellen, durch die Nutquerschnittsgesamtfläche begrenzt, da die Vorsprünge durch beim Einführen der Schraube durch die Nuten geführt werden müssen. Die Gesamtfläche der durch die Vorsprünge bereitgestellten Kopfwiderlagerfläche kann daher maximal die Nutquerschnittsgesamtfläche erreichen, wenn Außengewindedurchmesser und maximale Kanalweite einander nahezu entsprechen. Durch die zuvor genannten Verhältnisse und Verhältnisbereiche wird daher eine vorteilhafte Ausgewogenheit zwischen Belastbarkeit in der Kopfauflage der Schraube und Belastbarkeit des Außengewindes erzielt.

Noch weiter ist es bevorzugt, wenn der Außengewindeabschnitt zwei, drei oder mehr der Längsnuten aufweist und zwischen den Längsnuten entsprechend zwei, drei oder mehr Gewindeabschnitte angeordnet sind. Durch eine solche Anordnung wird eine gleichmäßige Belastung der Außengewindeabschnitte einerseits und der Kopfauflagepunkte und des Schraubenkopfes andererseits erreicht.

Dabei ist es besonders bevorzugt, wenn die Gewindeabschnitte als im Querschnitt mondsichelförmige Querschnittsflächenabschnitte über einen Gewindekerndurchmesser des Gewindeabschnitts vorstehen. Durch eine solche geometrische Gestaltung der Gewindeabschnitte zwischen den Längsnuten wird ein günstiges Eingreifen dieser Gewindeabschnitte in das Innengewinde im ersten Bauteil erzielt. Die Gewindeabschnitte können dabei vorzugsweise durch eine Kreiskontur eines Kreises mit exzentrisch zur Mittellängsachse liegendem Mittelpunkt außen begrenzt werden.

Dabei ist es besonders bevorzugt, wenn die Querschnittsfläche des Gewindeabschnitts die Form eines Vielkreises aufweist, der die Fläche eines Vielecks beinhaltet, bei dem auf zumindest zwei Seiten des Vielecks, vorzugsweise jeder Seite, ein Teilkreis aufgesetzt ist, wobei der Durchmesser der Teilkreise größer oder gleich der Seitenlängen des Vielecks sind, sodass die Seite des Vielecks die flächenbegrenzende Sekante des darauf aufgesetzten Teilkreises bildet und eine Sekante des Kerndurchmessers bildet. Eine solche Geometrie der Querschnittsfläche ergibt eine besonders günstige Zusammenwirkung des Außengewindes mit dem Innengewinde bei zugleich günstiger axialer Belastung der Schraube beim Anziehen des Außengewindes im Innengewinde.

Gemäß einer weiteren bevorzugten Ausführungsform ist vorgesehen, dass die Querschnittsfläche einer Längsnut oder jeder Längsnut die Form eines Dreiecks, eines Vierecks oder eines Kreisausschnitts haben. Längsnuten mit solcher Querschnittsfläche sind fertigungstechnisch bevorzugt im Hinblick auf sowohl die Herstellung der Schraube als auch die Herstellung des Schraubenkanals mit den Vorsprüngen.

Noch weiter ist es bevorzugt, wenn die Werkzeugaufnahme als eine Ausnehmung im Schraubenkopf ausgebildet ist und der Kopf eine zylindrische Außenform aufweist. Eine solche Werkzeugaufnahme kann beispielsweise als Aufnahme für einen Inbusschlüssel oder als Aufnahme für einen Torx-Schlüssel dienen und einen entsprechenden Innenvielkantquerschnitt aufweisen. Die Kopfform und Anordnung der Werkzeugaufnahme begünstigt eine kompakte Dimensionierung des Schraubenkopfes in radialer Richtung.

Noch weiter ist es bevorzugt, wenn sich der Vorsprung oder die Vorsprünge, welche die Schraubenkopfwiderlagerfläche bilden, sich bis zu dem ersten Bauteil benachbarten Ende des Schraubenkanals erstrecken, oder sich über einen oberen Abschnitt des Schraubenkanals erstrecken und der Schraubenkanal einen unteren Abschnitt, der zwischen dem oberen Abschnitt und der ersten Zahnersatzkomponente angeordnet ist, aufweist, dessen radiale Weite größer als die Umhüllende des Außengewindeabschnitts ist.

Gemäß der ersten Variante dieser Ausführungsform sind die Vorsprünge im unteren Bereich des Schraubenkanals angeordnet und erstrecken sich bis zu dessen unteren Ende, also dem zum ersten Bauteil weisenden Ende des Schraubenkanals. In diesem Fall wird die Schraube axial so weit durchgeschoben, dass das Außengewinde außerhalb des Schraubenkanals angeordnet ist und hierdurch die Rotationsfähigkeit der Schraube hergestellt wird. Im zweiten Fall kann das Außengewinde teilweise innerhalb des Schraubenkanals verbleiben, nämlich im unteren Abschnitt des Schraubenkanals, der eine Weite aufweist, die eine Rotation des Außengewindeabschnitts erlaubt.

Noch weiter ist es bevorzugt, wenn in der ersten Zahnersatzkomponente ein zwischen dem Innengewindeabschnitt und der ersten Zahnersatzkomponente angeordneter Schraubenkanalabschnitt ausgebildet ist, dessen radiale Weite größer als die Umhüllende des Außengewindeabschnitts ist. Durch einen solchen Schraubenkanalabschnitt in der ersten Zahnersatzkomponente wird eine Rotation der Schraube ermöglicht, wenn das Außengewinde durch die zweite Zahnersatzkomponente so weit durchgeschoben ist, dass das Außengewinde teilweise oder vollständig in diesem Schraubenkanalabschnitt angeordnet ist. Grundsätzlich ist zu verstehen, dass die ausreichende radiale Weite des Schraubenkanals zur Rotation des Außengewindes durch einen entsprechend weiten Schraubenkanalabschnitt ausgebildet sein kann, dessen axiale Länge mindestens der Länge des Außengewindeabschnitts entspricht und der in der ersten Zahnersatzkomponente, in der zweiten Zahnersatzkomponente angeordnet oder auf beide Zahnersatzkomponenten aufgeteilt sein kann.

Noch weiter ist es bevorzugt, wenn der Schraubenkanal einen Kopfaufnahmeabschnitt aufweist, dessen radiale Weite größer als die Umhüllende des Schraubenkopfes in Bezug auf eine Mittellängsachse des Schraubenkanals ist, wobei die axiale Länge des Kopfaufnahmeabschnitts entlang der Mittellängsachse vorzugsweise zumindest der axialen Länge des Schraubenkopfes entspricht. Durch einen solchen Kopfaufnahmeabschnitt wird es ermöglicht, dass der Schraubenkopf zumindest teilweise in dem Schraubenkanal versenkt angeordnet ist und insbesondere bei entsprechender axialer Länge des Kopfaufnahmeabschnitts vollständig in dem Schraubenkanal versenkt ist.

Es ist weiterhin bevorzugt, wenn in den Übergängen zwischen der Nut bzw. den Nuten und dem Außengewinde keine Schneidkante ausgebildet ist, insbesondere die Übergange zwischen der Nut bzw. den Nuten und dem Außengewinde verrundet sind. Durch diese Ausgestaltung wird einerseits ein günstiges Eingriffverhalten der Außengewindeabschnitte zwischen den Längsnuten in das Innengewinde erreicht und andererseits eine Spanbildung am Innengewinde zuverlässig vermieden.

Noch weiter ist es bevorzugt, wenn sich die Nut/die Nuten in axialer Richtung parallel zu einer Mittellängsachse der Schraube erstrecken und sich der Vorsprung/die Vorsprünge parallel zu einer Mittellängsachse des Schraubenkanals erstrecken, oder die Nut/die Nuten gewindeförmig um eine Mittellängsachse der Schraube verlaufen und der Vorsprung/die Vorsprünge gewindeförmig um eine Mittellängsachse des Schraubenkanals verlaufen, wobei die Steigung des Gewindes der Nut/Nuten mit der Steigung des Gewindes der Vorsprünge übereinstimmt und vorzugsweise steiler ist als die Steigung des Außengewindes und des Innengewindes. Gemäß dieser Ausführungsform wird in der ersten Variante die Schraube durch eine axiale, rotationsfreie Bewegung in den Schraubenkanal eingeführt. Bei der zweiten Variante erfolgt die Einführung der Schraube in den Schraubenkanal unter einer kombinierten axialen Vorschubbewegung und einer Rotation der Schraube.

Schließlich kann die erfindungsgemäße Zahnersatzvorrichtung fortgebildet werden, indem der Schraubenkanal in der zweiten Komponente ein zweites Innengewinde aufweist und eine dritte Komponente mittels einer Schraube, die in das zweite Innengewinde eingeschraubt ist, an der zweiten Komponente befestigt ist. Durch diese Ausgestaltung wird der Schraubenkanal in der zweiten Komponente dazu ausgebildet, mit einer zweiten Schraube zusammenzuwirken, die dazu dient, eine dritte Zahnersatzkomponente an der zweiten Zahnersatzkomponente zu befestigen. Hierdurch wird einerseits vermieden, dass zur Befestigung dieser dritten Komponente an der zweiten Komponente eine zusätzliche Bohrung mit Gewinde in der zweiten Komponente angeordnet werden muss, zugleich der erfindungsgemäße Vorteil einer geringen Weite bzw. eines geringen Durchmessers des Schraubenkanals genutzt, um darin eine Doppelfunktion bereitzustellen, nämlich erstens die Möglichkeit der Einführung der ersten Schraube zur Befestigung der zweiten Komponente an der ersten Komponente und zweitens die Möglichkeit der Befestigung einer zweiten Schraube mit einem Außengewinde in dem zweiten Innengewinde zur Befestigung der dritten Komponente an der zweiten Komponente.

Ein weiterer Aspekt der Erfindung ist eine Schraube zur Befestigung eines zweiten Bauteils an einem ersten Bauteil, mit einem Schraubenkopf mit einem Werkzeugangriffsabschnitt, einem Außengewindeabschnitt mit einem Außengewinde, und einem zwischen dem Schraubenkopf und dem Gewindeabschnitt liegender Schaftabschnitt, wobei im Übergang des Schraubenkopfes zu dem Schaftabschnitt eine Kopfauflagefläche ausgebildet ist, bei welcher der Außengewindeabschnitt der Schraube eine sich über die gesamte Länge des Außengewindes erstreckende Längsnut aufweist, und in den Übergängen zwischen der Nut bzw. den Nuten und dem Außengewinde keine Schneidkante ausgebildet ist, insbesondere der Übergang zwischen der Nut bzw. den Nuten und dem Außengewinde verrundet ist.

Die erfindungsgemäße Schraube entspricht der Schraube, welche zur Befestigung der zweiten Zahnersatzkomponente an der ersten Zahnersatzkomponente bei der Zahnersatzvorrichtung der zuvor beschriebenen Art verwendet wird. Die erfindungsgemäße Schraube eignet sich in günstiger Weise zur Verbindung von zwei Bauteilen miteinander, wenn beengte Platzverhältnisse für die Schraube zur Verfügung stehen oder eine möglichst geringe Schwächung der beiden Komponenten durch die Bereitstellung eines Innengewindes und eines Schraubenkanals mit einer Schraubenkopfwiderlagerfläche erreicht werden soll. Dabei ist zu verstehen, dass die Schraube insbesondere in solcher Art fortgebildet und zur Verbindung von zwei, insbesondere drei Bauteilen miteinander verwendet werden kann, wie dies für die Schraube in der zuvor beschriebenen Zahnersatzvorrichtung erläutert wurde, um die in dem Zusammenhang erläuterten Vorteile und Funktionen zu erreichen.

Schließlich ist ein weiterer Aspekt der Erfindung die Verwendung einer Schraube mit einem Schraubenkopf mit einem Werkzeugangriffsabschnitt, einem Außengewindeabschnitt mit einem Außengewinde, und einem zwischen dem Schraubenkopf und dem Gewindeabschnitt liegender Schaftabschnitt, wobei im Übergang des Schraubenkopfes zu dem Schaftabschnitt eine Kopfauflagefläche ausgebildet ist, zur Verbindung einer ersten mit einer zweiten Zahnersatzkomponente, bei welcher der Außengewindeabschnitt der Schraube eine sich über die gesamte Länge des Außengewindes erstreckende Längsnut aufweist, wobei die Schraube vorzugsweise der zuvor beschrieben Schraube entspricht.

Eine solche Verwendung ist besonders vorteilhaft, um bei einer Zahnersatzvorrichtung eine kompakte Bauweise, hohe Belastbarkeit und günstige Ästhetik bei gleichzeitig hoher Funktionalität und Belastbarkeit zu erreichen.

Bevorzugte Ausführungsformen der Erfindung werden anhand der beiliegenden Figuren erläutert. Es zeigen:
- Fig. 1: eine schematische, längsgeschnittene Seitenansicht einer erfindungsgemäßen Zahnersatzvorrichtung,
- Fig. 2: eine schematische, teilgeschnittene Seitenansicht der Schraube aus Fig. 1,
- Fig. 3A-F: verschiedene Varianten des Gewindeabschnitts der erfindungsgemäßen Schraube in einer schematischen Querschnittsdarstellung,
- Fig. 4A-F: verschiedene Varianten einer Verbindung von zwei Bauteilen mittels der erfindungsgemäßen Schraube in einer schematischen, längsgeschnittenen Seitenansicht, und
- Fig. 5a-c: verschiedene Varianten einer erfindungsgemäßen Verbindung von zweiteiligen Abutments und eines Implantats in einer schematischen, längsgeschnittenen Seitenansicht.

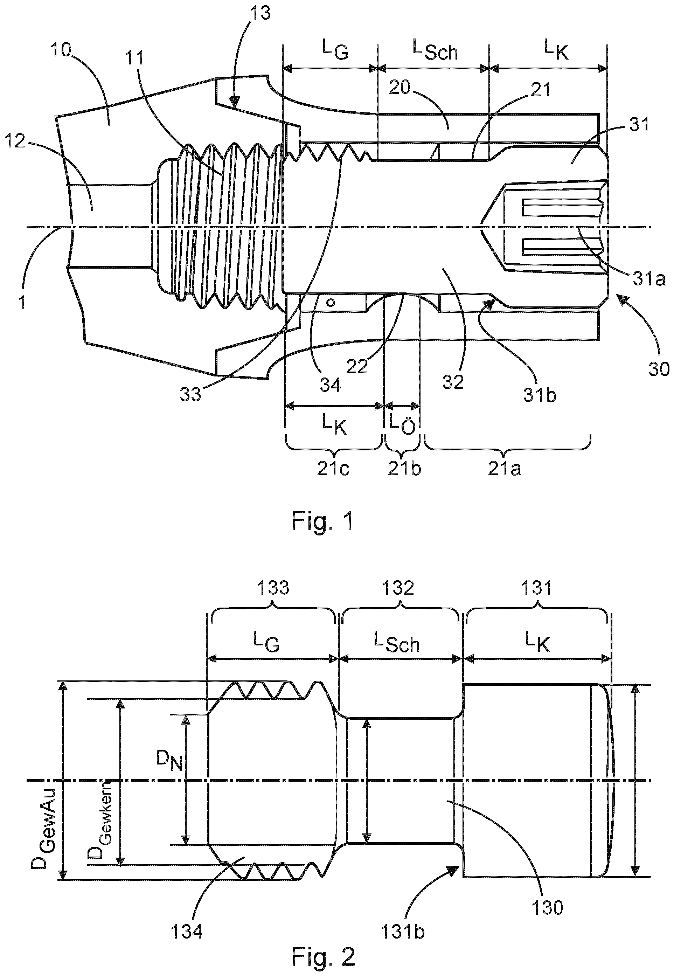

Fig. 1 zeigt ein Implantat 10, das ein sich entlang einer Mittellängsachse 1 erstreckende Innengewinde 11 in einer Bohrung 12 aufweist. Das Implantat 10 weist in einer koronalen Endfläche eine gestufte Kontur 13 auf, auf welche formschlüssig ein Abutment 20 aufgesetzt ist. Das Abutment 20 weist einen Schraubenkanal 21 auf, der in drei axiale Abschnitte 21a,b,c unterteilt ist. Ausgehend von einem koronalen, zylindrischen Abschnitt 21a schließt sich ein Schraubenkopfwiderlagerabschnitt 21b an, der zwischen dem koronalen Schraubenkanalabschnitt 21a und einem apikalen weiteren Schraubenkanalabschnitt 21c angeordnet ist. Die beiden Schraubenkanalabschnitte 21a, 21c weisen eine größere radiale Weite auf als der Schraubenkopfwiderlagerabschnitt 21b. Die radiale Weite des Schraubenkopfwiderlagerabschnitts 21b ist durch mehrere über den Umfang verteilte Vorsprünge 22 mit einer inneren axialen Länge L_{Ö} eingeschnürt, im vorliegenden Beispiel ist eine ungerade Anzahl an solchen Vorsprüngen 22 vorgesehen, sodass in der dargestellten Längsschnittansicht nur einer dieser Vorsprünge sichtbar ist.

Eine Schraube 30 ist in den Schraubenkanal 21 des Abutments 20 eingesetzt. Die Schraube 30 ist hierbei in axialer Richtung entlang der Mittellängsachse 1 bis zum Gewindeanfang des Innengewindes 11 vorgeschoben. Sie weist einen Schraubenkopf 31 mit einer axialen Länge L_{K} auf, in dem vom koronalen Ende ausgehend eine innenliegende Mehrkantausnehmung 31a nach Art einer Torx-Werkzeugaufnahme angeordnet ist, die zur Aufnahme eines Werkzeugs und zur Übertragung eines Drehmoments um die Mittellängsachse 1 der Schraube und des Schraubenkanals und des Innengewindes dient.

An dem dem Schraubenkopf 31 gegenüberliegenden Ende weist die Schraube ein Außengewinde 33 auf. Das Außengewinde 33 wird durch mehrere Längsnuten 34 unterbrochen. Die Anzahl der Längsnuten 34 entspricht der Anzahl der Vorsprünge 22 in dem Abutment 20. Die Längsnuten 34 sind dabei in radialer Richtung so tief in das Außengewinde eingeschnitten, dass sie bis zum Gewindekerndurchmesser reichen. Die Außenoberfläche der Schraube im Bereich der Längsnut weist dadurch einen geringeren Radius um die Mittellängsachse 1 auf als die lichte Weite des Radius um die Mittellängsachse 1 im Bereich des Vorsprungs 22, sodass die Schraube axial durch den Schraubenkanal geschoben werden kann, obwohl sie ein Außengewinde aufweist, dessen Außengewindedurchmesser größer ist als der Innendurchmesser zwischen den Vorsprüngen. Hierbei muss eine bestimmte Winkelausrichtung der Schraube um die Mittellängsachse 1 eingehalten werden, um die Längsnuten kongruent zu den Vorsprüngen auszurichten.

Das Außengewinde 33 der Schraube kommt nach dem Durchschieben durch den Schraubenkopfwiderlagerabschnitt 21b des Abutments 20 in dem apikalen Schraubenkanalabschnitt 21c zu liegen, der eine radiale Weite aufweist, die eine Rotation der Schraube um ihre Mittellängsachse 1 erlaubt. Die Schraube kann dadurch mit dem Außengewinde 33 in das Innengewinde 11 eingeschraubt werden. Hierbei kommt nach einem bestimmten Einschraubweg der Schraubenkopf mit einer konischen Kopfauflagefläche 31b auf den Vorsprüngen 22 des Abutments 20 zu liegen, deren zum Schraubenkopf weisenden Stirnflächen folglich ein Schraubenkopfwiderlager bilden. Dies ermöglicht es, die Schraube 30 zur Erzeugung eines Anpressdrucks im Kontaktbereich zwischen dem Implantat 10 und dem Abutment 20 aufeinanderzupressen, indem die Schraube durch weiteres Anziehen der Gewindeverbindung unter Zugkraft gesetzt wird.

Fig. 2 zeigt eine Variante der Schraube gemäß Fig. 1. Auch bei dieser Variante ist die Schraube in drei Abschnitte unterteilt, nämlich einen Kopfabschnitt 131 mit axialer Länge L_{K}, einen Gewindeabschnitt 133 mit axialer Länge L_{Sch} und einen zwischen Kopf- und Gewindeabschnitt liegenden Schaftabschnitt 132 mit axialer Länge Ls. Das Außengewinde weist einen Außengewindedurchmesser D_{GewAu} und einen Gewindekerndurchmesser D_{GewKern} auf. In das Außengewinde sind Längsnuten 134 mit einer Nuttiefe geschnitten, die bis zu einem dadurch definierten nutreduzierten Durchmesser D_{N} reichen.

Der Schaftabschnitt 132 weist einen maximalen Schaftdurchmesser D_{SA} auf, der diesem durch die Nuten reduzierten Durchmesser D_{N} entspricht oder kleiner als der Durchmesser D_{N} ist. Der Kopfabschnitt weist einen Schreaubenkopfdurchmesser D_{SK} auf, der dem Außengewindedurchmesser D_{GewAu} des Außengewindes entspricht. Die Schraube gemäß Fig. 1 unterscheidet sich von der in Fig. 2 gezeigten Schraube durch die Geometrie der Kopfauflagefläche 131b, die in Fig. 1 als konische Auflagefläche und in Fig. 2 als axiale Stirnringfläche ausgebildet ist.

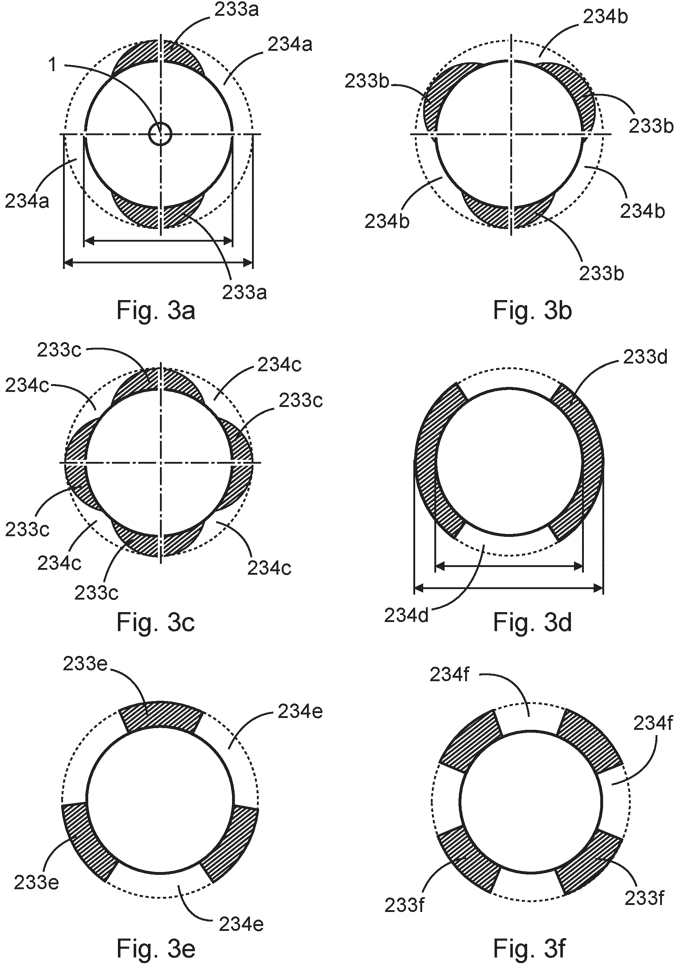

Fig. 3A-C zeigen drei Varianten der Querschnittsfläche der Schraube im Bereich des Außengewindes. Dabei sind die zwischen den Nuten verbleibenden Außengewindeabschnitte 233a,b,c bei den Varianten der Fig. 3A-C als mondsichelförmige Abschnitte definiert, deren Außenkontur durch ein Kreissegment eines Kreises gebildet wird, dessen Mittelpunkt exzentrisch zur Mittellängsachse 1 der Schraube angeordnet und dessen Durchmesser kleiner als der nutreduzierte Durchmesser D_{N} ist. In Fig. 3A ist hierbei eine Ausgestaltung mit zwei Längsnuten 234a und entsprechend zwei axialen Außengewindeabschnitten 233a, Fig. 3B mit drei Längsnuten 234b und entsprechend drei axialen Außengewindeabschnitten 233b und Fig. 3C mit vier Längsnuten 234c und entsprechend vier axialen Außengewindeabschnitten 233c abgebildet.

Die Fig. 3D-F zeigen in gleicher Darstellungsweise wie die Fig. 3A-C Varianten, bei denen zwei, drei oder vier Außengewindelängsabschnitte 233d,e,f über den Umfang verteilt angeordnet sind, und entsprechend zwei, drei oder vier Längsnuten 234d,e,f bei diesen Ausführungsformen durch radial von außen nach innen verlaufende Nutflanken begrenzt werden und sich dadurch im Querschnitt viereckige ringabschnittsförmige Nutquerschnitte ergeben.

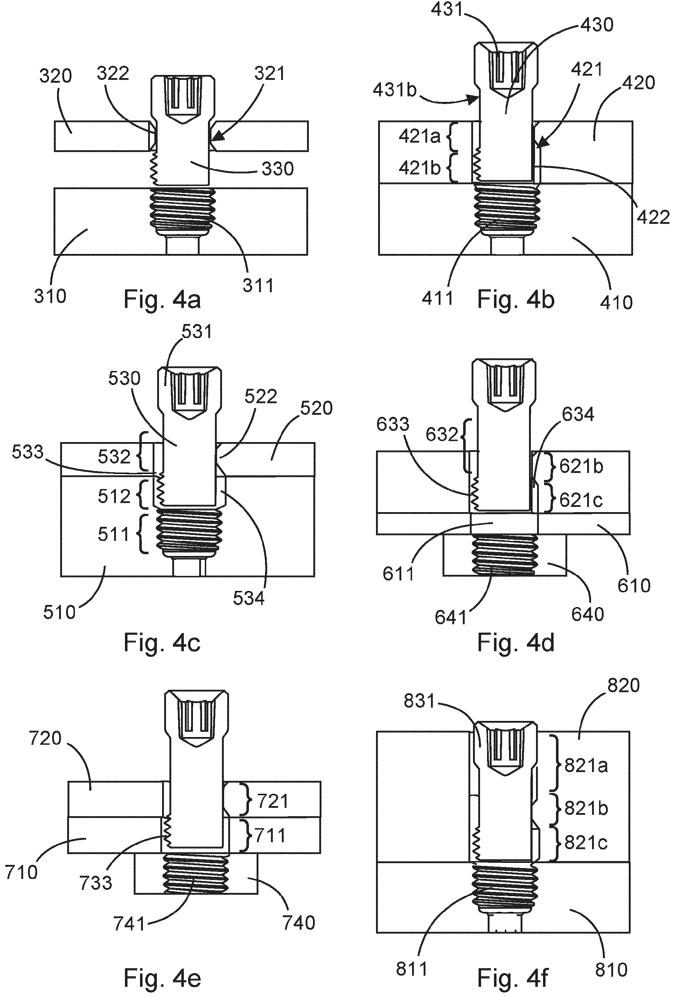

Fig. 4A zeigt eine erste Ausführungsform einer erfindungsgemäßen Verbindung von zwei Bauteilen 310, 320 mittels einer erfindungsgemäßen Schraube 330. Im ersten Bauteil ist ein Innengewinde 311 ausgebildet und im zweiten Bauteil ist ein Schraubenkanal 321, der mehrere über die gesamte Länge des Schraubenkanals axial reichende Vorsprünge 322 aufweist. Die Schraube kann durch hierzu korrespondierende Längsnuten im Außengewinde durch diesen Schraubenkanal in axialer Richtung hindurchgeführt werden. Die beiden Bauteile 310, 320 liegen initial in einem Abstand zueinander. In der durch den Abstand erzeugten Lücke kommt das Außengewinde während des Eindrehens in das Innengewinde frei zu liegen. Mit zunehmendem Eindrehen des Außengewindes in das Innengewinde reduziert sich dieser Abstand, bis die beiden Bauteile aufeinanderliegen und durch ein weiteres Anziehen der Schraube aufeinandergepresst und dadurch fest kraftschlüssig verbunden werden.

Bei der Ausführungsform gemäß Fig. 4B ist im ersten Bauteil 410 in gleicher Weise ein Innengewinde 411 ausgebildet. Im zweiten Bauteil 420 ist ein Schraubenkanal 421 ausgebildet, der in seinem oberen Abschnitt 421a wiederum mehrere Vorsprünge 422 aufweist, durch welche eine Schraube mit entsprechenden Längsnuten in ihrem Außengewinde axial hindurchgeführt werden kann. Der Schraubenkanal im zweiten Bauteil weist einen unteren Abschnitt 421b auf, in dem keine Vorsprünge angeordnet sind, sondern der einen Außendurchmesser hat, der größer oder gleich dem Außendurchmesser des Außengewindes der Schraube 430 ist. Die Schraube 430 kann, sobald das Außengewinde 433 in diesen erweiterten Bereich 421b hineingeschoben ist und dadurch ein Schaftabschnitt 432 der Schraube im Bereich der Vorsprünge 422 angeordnet ist, rotiert werden und hierdurch in das Innengewinde 411 eingeschraubt werden, bis der Schraubenkopf 431 mit der Kopfauflagefläche 431b zur Anlage an den Vorsprüngen 422 kommt, deren Stirnflächen 422a eine Kopfwiderlagerfläche bilden und das Verspannen der Schraubverbindung ermöglichen.

Fig. 4C zeigt eine Variante, bei der das erste Bauteil 510 ein Innengewinde 511 und einen gewindefreien Schraubenkanalabschnitt 512 aufweist, der zwischen dem Gewindeabschnitt 511 und der Grenzfläche zum zweiten Bauteil 520 angeordnet ist. Das zweite Bauteil weist einen Schraubenkanal mit sich über dessen gesamte Länge erstreckenden Vorsprüngen 522 auf, übereinstimmend zu dem zweiten Bauteil 320 der Ausführungsform gemäß Fig. 4A. Die Schraube 530 kann wiederum durch entsprechende Längsnuten 534 im Außengewinde durch den Schraubenkanal 521 im zweiten Bauteil axial hindurchgeschoben werden, bis das Außengewinde 533 in den Bereich des Schraubenkanals 512 im ersten Bauteil zu liegen kommt. Dieser erweiterte Schraubenkanalabschnitt 512 nimmt das gesamte Außengewinde 533 auf, sodass der Schaftabschnitt 532 der Schraube im Bereich der Vorsprünge 522 des zweiten Bauteils zu liegen kommt und die Schraube folglich rotiert werden kann. Durch diese Rotation kann die Schraube mit dem Außengewinde 533 in das Innengewinde 511 hineingedreht werden, bis wiederum die Kopfauflagefläche des Schraubenkopfs 531 auf den Vorsprüngen zu liegen kommt, die eine Schraubenkopfwiderlagerfläche bilden und das Verspannen der Schraubverbindung ermöglichen.

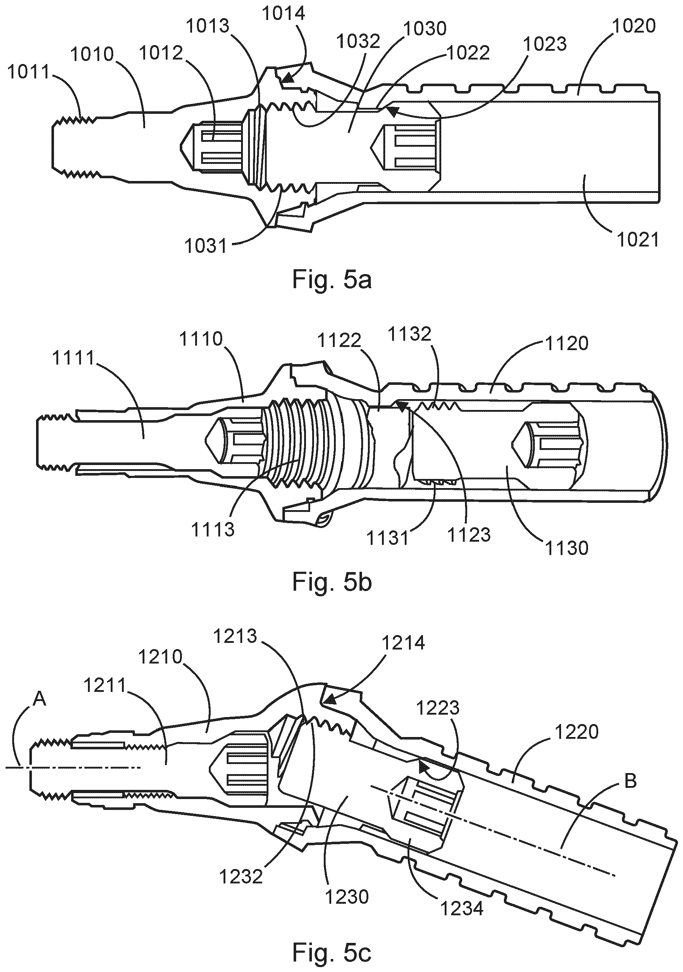

Fig. 4D zeigt eine weitere Variante, bei der die Befestigung des ersten Bauteils 610 am zweiten Bauteil 620 mittels einer Schraube 630 und einer Schraubenmutter 640 erfolgt. Die Schraubenmutter 640 weist hierbei ein Innengewinde 641 auf. Im ersten Bauteil 610 ist ein Schraubenkanal 611 ausgeführt, dessen Durchmesser dem Außendurchmesser des Außengewindes 633 der Schraube entspricht oder größer als dieser ist. Im zweiten Bauteil 620 ist ein Schraubenkanal 621 mit einem Kopfwiderlagerabschnitt 621b und einem erweiterten Schraubenkanalabschnitt 621c ausgebildet, übereinstimmend zu der Gestaltung des Schraubenkanals bei der Ausführungsform gemäß Fig. 5B. Die Schraube 630 kann wiederum aufgrund von Längsnuten 634 in ihrem Außengewinde 633 axial durch den Kopfwiderlagerabschnitt 621b des zweiten Bauteils hindurchgeführt werden, bis das Außengewinde 633 im Bereich des erweiterten Schraubenkanalabschnitts 621c zu liegen kommt und/oder im Bereich des Schraubenkanalabschnitts im ersten Bauteil 610 zu liegen kommt. Der Schaftabschnitt 632 der Schraube liegt dann im Bereich des Kopfwiderlagerabschnitts 621b des zweiten Bauteils und die Schraube kann rotiert werden, um sie in das Innengewinde der Mutter 640 einzuschrauben. Grundsätzlich ist zu verstehen, dass bei der in Fig. 4D gezeigten Variante die Längenabmessungen auch solcherart ausgebildet sein können, dass das Außengewinde 633 im Bereich des Schraubenkanals 611 im ersten Bauteil und im erweiterten Schraubenkanalabschnitt 621c im zweiten Bauteil 620 zu liegen kommt. Weiterhin ist es bei dieser Ausführungsform möglich, auf einen erweiterten Kanalabschnitt 621c im zweiten Bauteil und eine Rotationsmöglichkeit der Schraube zu verzichten, wenn in Kauf genommen wird, dass die Schraubverbindung nur durch Rotation der Mutter 640 angezogen werden kann.

Fig. 4E zeigt eine weitere Ausführungsform, bei der das zweite Bauteil 720 einen Schraubenkanal 721 mit sich über den gesamten Schraubenkanal axial erstreckenden Vorsprüngen 722 aufweist, wie bei der Ausführungsform gemäß Fig. 4A und Fig. 4C. Das erste Bauteil 710 weist einen Schraubenkanal 711 mit einem Schraubenkanaldurchmesser auf, der größer oder gleich dem Außengewindedurchmesser ist. Wiederum wird eine Mutter 740 mit einem Innengewinde 741 zur Herstellung der Schraubverbindung mit der Schraube 730 eingesetzt. Sobald das Außengewinde 733 der Schraube axial durch den Schraubenkanal 721 im zweiten Bauteil hindurchgeschoben wurde, kann die Schraube gedreht werden und in das Innengewinde der Mutter 740 eingeschraubt werden, um die Schraubverbindung zu verspannen. Auch hier ist zu verstehen, dass auf eine Rotationsfähigkeit der Schraube auch verzichtet werden kann und die axialen Abmessungen der Abschnitte von Schraube und Bauteilen folglich so verändert werden können, dass die Schraube keine Rotationsfähigkeit im Schraubenkanal aufweist, wenn in Kauf genommen wird, dass das Anziehen der Schraubverbindung durch eine Rotation der Mutter alleine ausgeführt wird.

Figur 4F zeigt eine sechste Ausführungsform der Erfindung, bei welcher das erste Bauteil 810 ein Innengewinde 811 aufweist, übereinstimmend zu der Gestaltung des ersten Bauteils der Ausführungsform gemäß Fig. 4A. Das zweite Bauteil weist einen Schraubenkanal auf, der in drei Abschnitte unterteilt ist. Ein mittlerer Abschnitt 821b weist mehrere Vorsprünge auf, die an ihrem oberen Ende eine Kopfwiderlagerfläche ausbilden. Zwischen diesem mittleren Abschnitt 821b und der Grenzfläche zum ersten Bauteil ist ein Schraubenkanalabschnitt mit erweitertem Durchmesser angeordnet, in den das Außengewinde der Schraube axial hineingeschoben werden kann, sodass der Schaftabschnitt der Schraube im Bereich des Schraubenwiderlagerabschnitts 821b zu liegen kommt. Das Außengewinde kann in diesem Schraubenkanalabschnitt mit erweitertem Durchmesser rotiert werden und folglich in das Innengewinde 811 des ersten Bauteils 810 eingeschraubt werden. Der Schraubenkopfwiderlagerabschnitt 821b liegt zwischen diesem erweiterten Schraubenkanalabschnitt 821c und einem ebenfalls erweiterten Schraubenkanalabschnitt 821a, dessen Durchmesser so groß ist, dass er größer oder gleich dem Durchmesser des Schraubenkopfs 831 der Schraube ist. Der Schraubenkopf liegt daher nach Anziehen der Schraubverbindung versenkt im zweiten Bauteil.

Fig. 5a zeight eine erste erfindungsgemäße Ausführungsform eines Multi-Unit-Abutments.Das Multi-Unit-Abutment besteht aus einem unteren Teil 1010, der ein Außengewinde 1011 aufweist, mit dem der untere Teil 1010 direkt mit einem Implantat (nicht dargestellt) verbunden werden kann. Damit dieser Teil 1010 in ein entsprechendes Innengewinde in dem Implantat eingeschraubt werden kann, weist der Teil 1010 eine innenliegende Werkzeugaufnahme 1012 auf. In dem mit dem Implantat in Kontakt kommenden Bereich weist das untere Teil 1010 eine Außenkontur mit einem konusförmigen Abstützbereich auf, der zur stabilen Verankerung im Implantat ausgestaltet ist und keinen Rotationsschutz aufweist.

Das untere Teil 1010 weist darüber hinaus ein Innengewinde 1013 sowie eine nach koronal weisende gestufte Außenkontur 1014 auf. Auf das untere Teil 1010 wird ein oberes Teil 1020 des Multi-Unit-Abutments gesetzt und mittels einer erfindungsgemäßen Schraube 1030 mit einem Außengewinde 1032 mit Nut 1031 verbunden. Das Außengewinde der Schraube 1030 wird in das Innengewinde 1013 im unteren Teil 1010 eingeschraubt. Dabei weist das obere Teil 1020 einen Schraubendurchgangskanal 1021 mit einer erfinungsgemäßen, durch Vorsprünge 1022 gebildeten Schraubenwiderlagerfläche 1023 auf.

Es ist zu verstehen, dass bezüglich der Geometrievorgaben und funktionalen sowie strukturellen Zusammenhänge die Beschreibung zu Fig. 1 auch für die erfindungsgemäße Ausgestaltung der Schraube 1030 und der Vorsprünge 1022 der Ausführungsform der Fig. 5a anwendbar sind. Bei der Ausführungsform der Fig. 5a wird im Unterschied zu der Ausführungsform der Fig. 1 die erfindungemäße Schraube nicht in ein Implantat sondern in den unteren Teil eines Multi-Unit-Abutments eingeschraubt und verbindet dementsprechend nicht ein Abutment mit einem Implantat, sondern einen oberen Teil eines Abutments mit einem unteren Teil des Abutments. Die Ausführungsform der Fig. 5a findet vorzugsweise dann Anwendung, wenn durch das Multi-Unit-Abutment kein Winkelausgleich der implantatlängsachse zu der Abutmentlängsachse erfolgen muss.

Fig. 5b zeigt eine zweite ergfindungsgemäße Ausführungsform eines Multi-Unit-Abutments, das einen unteren Teil 1110 aufweist, der mittels einer ersten Schraube 1111 mit einem Implantat (nicht dargestellt) verbunden wird. Darüber hinaus weist das Multi-Unit-Abutment dieser Ausführungsform einen oberen Teil 1120 auf, der mittels einer zweiten Schraube 1130 mit dem unteren Teil 1110 verbunden wird. Die zweite Schraube 1130 ist in Fig. 5b in einen Schraubenkanal 1121 des oberen Teils 1120 eingeführt, jedoch noch nicht mittels einer in einem Außengewinde 1132 der Schraube ausgebildeten Nut 1131 über einen Vorsprung 1122 axial geführt und in ein Innegewinde 1113 des ersten teils geschraubt. Sowohl diese zweite Schraube 1130 als auch eine Schraubenkopfwiderlagerfläche 1123 am Vorsprung 1122 im oberen Teil sind erfindungsgemäß ausgeführt, so dass der Durchmesser eines Schraubenkopfes 1133 der zweiten Schraube 1130 annähernd den gleichen Außendurchmesser hat wie das Außengewinde 1132 dieser Schraube.

Fig. 5c zeigt eine dritte erfindungsgemäße Ausführungsform eines Multi-Unit-Abutments, welche so ausgestaltet ist, dass hiermit ein Winkelausgleich zwischen der Längsachse A des Implantats (nicht dargestellt) und der Längsachse B eines oberen Teils 1220 des Multi-Unit-Abutments erfolgen kann. Dabei wird ein unterer Teil 1210 des Multi-Unit-Abutments mittels einer Schraube 1211 mit dem Implantat verbunden, die in einem Längskanal des unteren Teils angeordnet ist, dessen Längsachse A insbesondere koaxial zur Längsachse des Implantats liegen kann. Der koronale Bereich dieses unteren Teils weist eine gestufte Außenkontur 1214 und eine Öffnung mit einem Innengewinde 1213 auf. Das Innengewinde erstreckt sich axial entlang der zweiten Achse B, die gegenüber der Achse A des Schraubenkanals abgewinkelt ist.

Auf diesen oberen Bereich des unteren Teils 1210 wird das obere Teil 1220 gesetzt und mittels einer zweiten Schraube 1230 mit dem unteren Teil verbunden. Diese Schraubverbindung wird in erfindungsgemäßer Weise mittels einer erfindungsgemäßen Schraube 1230, die in das Innengewinde 1213 des unteren Teils hineingeschraubt wird, ausgeführt. Die Schraubendurchgangsöffnung des oberen Teils und die dort ausgebildete Schraubenkopfwiderlagerfläche 1223 sind erfindungsgemäß gestaltet, sodass der Durchmesser des Schraubenkopfes 1234 der zweiten Schraube nur so groß wie der Ummantelungsdurchmesser des Außengewindes 1232 dieser zweiten Schraube sein kann.

Diese Ausführungsform kann dahingehend modifiziert werden, dass das Innengewinde des unteren Teils 1210, in das die erfindungsgemäße Schraube gedreht wird, keine über die gesamte axiale Länge vollständig umlaufenden Gewindegänge aufweist, sondern durch Ausnehmungen in diesem Innengewinde der notwendige Platz geschaffen wird, um die erste Schraube durch die abgewinkelte Öffnung hindurchzuführen.

Grundsätzlich ist zu verstehen, dass die Ausführungsformen der Figuren 5b und 5c auch dahingehend modifiziert werden können, dass neben der erfindungsgemäß ausgeführten Schraubverbindung mittels der zweiten Schraube auch die Schraubverbindung mittels der ersten Schraube, die zum Verbinden des unteren Teils des Multi-Unit-Abutments mit dem Implantat dient, und dementsprechend die Schraubendurchgangsöffnung des unteren Bauteils ebenfalls erfindungsgemäß ausgeführt sein können. Hierdurch kann auch der Schraubenkopfdurchmesser der ersten Schraube erheblich, beispielsweise auf den Durchmesser der Umhüllenden des Außengewindes dieser Schraube, reduziert werden, und die erforderliche Öffnungsgröße des Kanals, durch den die Schraube in das untere Teil eingeführt wird, kann dementsprechend ebenfalls reduziert werden.

## Patentansprüche

1. Zahnersatzvorrichtung, umfassend
• eine erste, im Mundraum eines Patienten zu befestigende Zahnersatzkomponente mit einem Innengewinde,
• eine zweite, im Mundraum des Patienten an der ersten Komponente zu befestigende Zahnersatzkomponente mit einem Schraubenkanal und einer Schraubenkopfwiderlagerfläche, und
• eine Schraube zur Befestigung der zweiten Zahnersatzkomponente an der ersten Zahnersatzkomponente, mit
∘ einem Schraubenkopf mit einem Werkzeugangriffsabschnitt,
∘ einem Außengewindeabschnitt mit einem zu dem Innengewinde der ersten Zahnersatzkomponente korrespondierenden Außengewinde, und
∘ einem zwischen dem Schraubenkopf und dem Gewindeabschnitt liegender Schaftabschnitt,
∘ wobei im Übergang des Schraubenkopfes zu dem Schaftabschnitt eine Kopfauflagefläche ausgebildet ist zur Abstützung des Schraubenkopfes auf der Schraubenkopfwiderlagerfläche der zweiten Zahnersatzkomponente, und
oder Gewindeabschnitt und der Schaftabschnitt zur Durchführung durch den Schraubenkanal der zweiten Zahnersatzkomponente ausgebildet sind,
**dadurch gekennzeichnet, dass**
• der Außengewindeabschnitt der Schraube eine sich über die gesamte Länge des Außengewindes erstreckende Längsnut aufweist, und
• die Schraubenkopfwiderlagerfläche der zweiten Komponente einen zu der Längsnut korrespondierenden Vorsprung aufweist, dessen Querschnittsabmessungen so ausgebildet sind, dass der Vorsprung beim Durchführen des Außengewindeabschnitts durch den Schraubenkanal in die Längsnut eingreift.

2. Zahnersatzvorrichtung nach Anspruch 1,
**dadurch gekennzeichnet, dass** die Schraubenkopfwiderlagerfläche durch den einen Vorsprung und zumindest einen weiteren Vorsprung gebildet wird und dass der Außengewindeabschnitt zu den Vorsprüngen korrespondierende Längsnuten aufweist.

3. Zahnersatzvorrichtung nach Anspruch 1 oder 2,
**dadurch gekennzeichnet, dass** sich die Schraube axial entlang einer Mittellängsachse erstreckt und
• der Schraubenkopf in radialer Richtung in Bezug auf die Mittellängsachse eine maximale Schraubenkopfweite, insbesondere einen maximalen Schraubenkopfdurchmesser (D_{SK}),
• der Schaftabschnitt in radialer Richtung in Bezug auf die Mittellängsachse eine maximale Schaftweite, insbesondere einen maximalen Schaftdurchmesser (D_{SA}),
• der Außengewindeabschnitt einen Außengewindedurchmesser (D_{GewAu}), der dem Außendurchmesser der zylindrischen Umhüllenden des Gewindeabschnitts entspricht,
• der Außengewindeabschnitt einen Gewindekerndurchmesser D_{GewKern},
• die Nut einen Nutgrund und eine Nuttiefe, gemessen in radialer Richtung in Bezug auf die Mittellängsachse von dem Außengewindedurchmesser (D_{GewAu}) zu dem Nutgrund,
• die Querschnittsfläche des Schraubenkanals eine maximale und eine minimale Weite, und
• der Vorsprung einen radiale Vorsprungshöhe, gemessen als Differenz aus maximaler zu minimaler Weite,
aufweist, wobei vorzugsweise
• der Außengewindedurchmesser (D_{GewAu}) und die maximale Schraubenkopfweite (D_{SK}) weniger als 5 - 10 %, bezogen auf den Wert des größeren Durchmessers, voneinander abweichen, insbesondere Außengewindedurchmesser (D_{GewAu}) und Schraubenkopfweite (D_{SK}) gleich sind, und/oder
• die maximale Schaftweite kleiner als die maximale Schraubenkopfweite (D_{SK}) ist, und/oder
• der Gewindekerndurchmesser (D_{GewKern}) und die maximale Schaftweite (D_{SA}) weniger als 5 - 10 %, bezogen auf den Wert des größeren Durchmessers, voneinander abweichen, und/oder
• die Vorsprungshöhe kleiner als die Nuttiefe ist, und/oder
• die Differenz aus halbem Außengewindedurchmesser (D_{GewAu}) und Nuttiefe größer ist als die Hälfte der minimalen Weite des Schraubenkanals, und/oder
• die Nuttiefe größer oder gleich der Hälfte der Differenz aus dem Außengewindedurchmesser (D_{GewAu}) und dem Gewindekerndurchmesser (D_{GewKern}) ist.

4. Zahnersatzvorrichtung nach Anspruch 3,
**dadurch gekennzeichnet, dass**
die Schraube in einer Querschnittsfläche bezogen auf die Mittellängsachse einen Nutquerschnittsanteil von 0,3 bis 0,7 aufweist, wobei der Nutquerschnittsanteil definiert ist als Verhältnis einer Nutquerschnittsgesamtfläche zu einer Ringquerschnittsfläche, worin
• die Nutquerschnittsgesamtfläche definiert ist als die Summe von Nutquerschnittsflächen aller Nuten der Schraube, wobei eine Nutquerschnittsfläche definiert ist als die Größe einer Fläche, die
∘ radial durch den Gewindekerndurchmesser (D_{GewKern}) und den Außengewindedurchmesser (D_{GewAu}) begrenzt wird und
∘ in Umfangsrichtung durch die Nutflankenflächen begrenzt wird, und die
• Ringquerschnittsfläche definiert ist als die Größe einer Ringfläche, die zwischen einem Kreis mit Gewindekerndurchmesser (D_{GewKern}) und einem Kreis mit Außengewindedurchmesser (D_{GewAu}) liegt,
wobei der Nutquerschnittsanteil vorzugsweise mindestens 0,3 und vorzugsweise mindestens 0,4 oder mindestens 0,5 groß ist und
wobei der Nutquerschnittsanteil vorzugsweise höchstens 0,7 und vorzugsweise höchstens 0,6 oder höchstens 0,5 groß ist und
weiter vorzugsweise der Nutquerschnittsanteil über zumindest 75 % der Gesamtlänge des Gewindes, insbesondere über die gesamte Länge des Außengewindes zwischen 0,3, 0,4, oder 0,5 als Untergrenze und 0,7, 0,6 oder 0,5 als Obergrenze liegt.

5. Zahnersatzvorrichtung nach einem der vorhergehenden Ansprüche,
**dadurch gekennzeichnet, dass** der Außengewindeabschnitt zwei, drei oder mehr der Längsnuten aufweist und zwischen den Längsnuten entsprechend zwei, drei oder mehr Gewindeabschnitte angeordnet sind,
wobei vorzugsweise die Gewindeabschnitte als im Querschnitt mondsichelförmige Querschnittsflächenabschnitte über einen Gewindekerndurchmesser des Gewindeabschnitts vorstehen.

6. Zahnersatzvorrichtung nach Anspruch 5,
**dadurch gekennzeichnet, dass** die Querschnittsfläche des Gewindeabschnitts die Form eines Vielkreises aufweist, der die Fläche eines Vielecks beinhaltet, bei dem auf zumindest zwei Seiten des Vielecks, vorzugsweise jeder Seite, ein Teilkreis aufgesetzt ist, wobei der Durchmesser der Teilkreise größer oder gleich der Seitenlängen des Vielecks sind, sodass die Seite des Vielecks die flächenbegrenzende Sekante des darauf aufgesetzten Teilkreises bildet und eine Sekante des Kerndurchmessers bildet.

7. Zahnersatzvorrichtung nach einem der vorhergehenden Ansprüche 1-6,
**dadurch gekennzeichnet, dass** die Querschnittsfläche einer Längsnut oder jeder Längsnut die Form eines Dreiecks, eines Vierecks oder eines Kreisausschnitts haben.

8. Zahnersatzvorrichtung nach einem der vorhergehenden Ansprüche,
**dadurch gekennzeichnet, dass** die Werkzeugaufnahme als eine Ausnehmung im Schraubenkopf ausgebildet ist und der Kopf eine zylindrische Außenform aufweist.

9. Zahnersatzvorrichtung nach einem der vorhergehenden Ansprüche,
**dadurch gekennzeichnet, dass**
sich der Vorsprung oder die Vorsprünge, welche die Schraubenkopfwiderlagerfläche bilden,
• sich bis zu dem ersten Bauteil benachbarten Ende des Schraubenkanals erstrecken, oder
• sich über einen oberen Abschnitt des Schraubenkanals erstrecken und der Schraubenkanal einen unteren Abschnitt, der zwischen dem oberen Abschnitt und der ersten Zahnersatzkomponente angeordnet ist, aufweist, dessen radiale Weite größer als die Umhüllende des Außengewindeabschnitts ist.

10. Zahnersatzvorrichtung nach einem der vorhergehenden Ansprüche, **dadurch gekennzeichnet, dass**
in der ersten Zahnersatzkomponente ein zwischen dem Innengewindeabschnitt und der ersten Zahnersatzkomponente angeordneter Schraubenkanalabschnitt ausgebildet ist, dessen radiale Weite größer als die Umhüllende des Außengewindeabschnitts ist.

11. Zahnersatzvorrichtung nach einem der vorhergehenden Ansprüche,
**dadurch gekennzeichnet, dass**
- der Schraubenkanal einen Kopfaufnahmeabschnitt aufweist, dessen radiale Weite größer als die Umhüllende des Schraubenkopfes in Bezug auf eine Mittellängsachse des Schraubenkanals ist, wobei die axiale Länge des Kopfaufnahmeabschnitts entlang der Mittellängsachse vorzugsweise zumindest der axialen Länge des Schraubenkopfes entspricht, oder
- der Schraubenkanal in der zweiten Komponente ein zweites Innengewinde aufweist und eine dritte Komponente mittels einer Schraube, die in das zweite Innengewinde eingeschraubt ist, an der zweiten Komponente befestigt ist.

12. Zahnersatzvorrichtung nach einem der vorhergehenden Ansprüche,
**dadurch gekennzeichnet, dass** in den Übergängen zwischen der Nut bzw. den Nuten und dem Außengewinde keine Schneidkante ausgebildet ist, insbesondere die Übergänge zwischen der Nut bzw. den Nuten und dem Außengewinde verrundet ist.

13. Zahnersatzvorrichtung nach einem der vorhergehenden Ansprüche,
**dadurch gekennzeichnet, dass**
sich die Nut/die Nuten in axialer Richtung parallel zu einer Mittellängsachse der Schraube erstrecken und der Vorsprung/die Vorsprünge parallel zu einer Mittellängsachse des Schraubenkanals erstrecken, oder
sich die Nut/die Nuten gewindeförmig um eine Mittellängsachse der Schraube verlaufen und der Vorsprung/die Vorsprünge gewindeförmig um eine Mittellängsachse des Schraubenkanals verlaufen, wobei die Steigung des Gewindes der Nut/Nuten mit der Steigung des Gewindes der Vorsprünge übereinstimmt und vorzugsweise steiler ist als die Steigung des Außengewindes und des Innengewindes.

14. Schraube zur Befestigung eines zweiten Bauteils an einem ersten Bauteil, mit
• einem Schraubenkopf mit einem Werkzeugangriffsabschnitt,
• einem Außengewindeabschnitt mit einem Außengewinde, und
• einem zwischen dem Schraubenkopf und dem Gewindeabschnitt liegender Schaftabschnitt,
• wobei im Übergang des Schraubenkopfes zu dem Schaftabschnitt eine Kopfauflagefläche ausgebildet ist,
**dadurch gekennzeichnet, dass**
- der Außengewindeabschnitt der Schraube eine sich über die gesamte Länge des Außengewindes erstreckende Längsnut aufweist, und
- in den Übergängen zwischen der Nut bzw. den Nuten und dem Außengewinde keine Schneidkante ausgebildet ist, insbesondere der Übergang zwischen der Nut bzw. den Nuten und dem Außengewinde verrundet ist,
wobei die Schraube vorzugsweise fortgebildet ist mit den Merkmalen der Schraube der Zahnersatzvorrichtung nach einem der vorhergehenden Ansprüche 1-13.

15. Verwendung einer Schraube mit
• einem Schraubenkopf mit einem Werkzeugangriffsabschnitt,
• einem Außengewindeabschnitt mit einem Außengewinde, und
• einem zwischen dem Schraubenkopf und dem Gewindeabschnitt liegender Schaftabschnitt,
• wobei im Übergang des Schraubenkopfes zu dem Schaftabschnitt eine Kopfauflagefläche ausgebildet ist,
zur Verbindung einer ersten mit einer zweiten Zahnersatzkomponente,
**dadurch gekennzeichnet, dass**
• der Außengewindeabschnitt der Schraube eine sich über die gesamte Länge des Außengewindes erstreckende Längsnut aufweist,
• wobei die Schraube vorzugsweise nach Anspruch 15 ausgebildet ist.
